(19) Europäisches Patentamt

European Patent Office

Office européen des brevets

(11) **EP 1 204 075 A1**

(12) **EUROPEAN PATENT APPLICATION**

(43) Date of publication:
**08.05.2002 Bulletin 2002/19**

(51) Int Cl.7: **G06T 17/00**, G06T 15/20

(21) Application number: **00123861.7**

(22) Date of filing: **02.11.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **SUN MICROSYSTEMS, INC.**<br>**Palo Alto, California 94303 (US)** | (72) Inventor: **Weiss, Armin**<br>**22765 Hamburg (DE)**<br><br>(74) Representative: **Betten & Resch**<br>**Postfach 10 02 51**<br>**80076 München (DE)** |

(54) **Producing a 3D rotational image from a 2D image of overlapping polygons**

(57)    A method for producing a three-dimensional image from a two-dimensional image including objects represented by a plurality of polygons, the method comprising:

ordering polygons in said plurality of polygons in a sequence defined by layering of said polygons in the two-dimensional image wherein a first polygon in said sequence is a reference polygon;
sequentially assigning each polygon in said sequence, starting with said reference polygon, to one of a plurality of layers so that within a given layer a polygon assigned to that layer neither (i) overlaps with another polygon in the given layer, nor (ii) is included within another polygon in the given layer; and
rotating the polygons of each layer around a common rotational axis to form a three-dimensional representation having a maximum rotational angle around said rotational axis with each polygon in a reference layer having a minimum rotational angle and polygons in layers other than said reference layer having a rotational angle greater than said minimum rotational angle and less than or equal said maximum rotational angle.

Fig. 1B

EP 1 204 075 A1

Printed by Jouve, 75001 PARIS (FR)

**Description**

BACKGROUND OF THE INVENTION

Field of the Invention

The invention relates generally to computer generated three-dimensional images, and in particular to a method and an apparatus for producing a three-dimensional image from a two-dimensional image by rotating the two-dimensional image.

Description of Related Art

As used herein, the term image generally refers to two-dimensional arrangements of objects from any desired sources and of any desired content, that is in particular photographic or synthetic images and also two-dimensional areas, which represent distributions of measured values or other variables. Also, herein two-dimensional images contain objects defined by polygons (outline edges) and by patterns, color and/or shading of the areas. The objects may partially overlap such that the objects are only partly visible to the viewer.

Computer-based methods for converting a two-dimensional image to a three-dimensional image are known. For example, such a method is used in image processing systems.

One method of generating a three-dimensional image uses rotation of the two-dimensional image around a rotation axis. This works quite well for single objects as well as for multiple objects which are overlapping as long as the rotation angle is 360°. If the rotation angle does not equal 360° the known method comes along with a loss of information regarding the two-dimensional overlapping objects.

Hence, a better method is needed for generating a three-dimensional image from a two-dimensional image by rotation.

SUMMARY OF THE INVENTION

According to an embodiment of this invention, a method for producing a three-dimensional representation from a two-dimensional image by rotation allows a better representation of the spatial depth (the distance from the viewer) of objects than the prior art methods when rotating said two-dimensional images into a three-dimensional object. A two-dimensional image contains a number of objects, which-if they overlap with each other - are represented in layers from front to rear, perpendicularly with respect to the two-dimensional image plane. Each object is defined by a polygon which encloses a distinguishably represented area of the two-dimensional image.

The method of this embodiment orders polygons in a plurality of polygons of a two-dimensional image in a sequence defined by layering of the polygons in the two-dimensional image. A first polygon in the sequence is a reference polygon.

The method of this embodiment of the invention sequentially assigns each polygon in the sequence, starting with the reference polygon, to one of a plurality of layers so that within a given layer a polygon assigned to that layer neither (i) overlaps with another polygon in the given layer, nor (ii) is included within another polygon in the given layer. After the assignment to the layer, the method rotates the polygons of each layer around a common rotational axis to form a three-dimensional representation having a maximum rotational angle around said rotational axis with each polygon in a reference layer having a minimum rotational angle and polygons in layers other than said reference layer having a rotational angle greater than said minimum rotational angle and less than or equal said maximum rotational angle.

The method according to this embodiment is associated with a series of advantages: the polygons are ordered in layers according to their depth by using the depth information implicitly present in the two-dimensional image. A polygon handled later is assigned to the layer of the polygon previously considered if there is no overlap but is assigned to a new layer if there is an overlap with the polygon previously considered, or if there is an inclusion. This has the effect of producing a better impression of the depth in the three-dimensional rotational image while at the same time minimizing the layers required. It creates advantages with regard to the running time for the method, since the complexity of the method merely increases linearly with the number of objects. Moreover, a representation with a natural look is achieved. The provision of values for the minimum rotational angle and the maximum rotational angle of the three-dimensional image serves to ensure a good visual impression for the viewer.

By rotating the two-dimensional objects of the layers which are located more in front (closer to the viewer) by a larger rotational angle, the rotational representation maintains the depth information which is contained in the two-dimensional image in the form of overlaps between the two-dimensional objects. Moreover, the depth information is not only maintained, it is even visualized more clearly and it gives the user the possibility to recognize even in the rotational image which object has been located more behind or more in front before the rotational image was generated.

In one embodiment, the invention includes a system having a processor and a memory storing instructions to perform a method for producing a three-dimensional image from a two-dimensional image including objects represented by a plurality of polygons, the method comprising:

ordering polygons in the plurality of polygons in a sequence defined by layering of the polygons in the two-dimensional image wherein a first polygon in the sequence is a reference polygon;

sequentially assigning each polygon in the sequence, starting with the reference polygon, to one of a plurality of layers so that within a given layer no polygon assigned to the given layer (i) overlaps with another polygon in the given layer, and (ii) is included within another polygon in the given layer; and rotating the polygons of each layer around a common rotational axis to form a three-dimensional representation having a maximum rotational angle around said rotational axis with each polygon in a reference layer having a minimum rotational angle and polygons in layers other than said reference layer having a rotational angle greater than said minimum rotational angle and less than or equal said maximum rotational angle.

The system can be, for example, a client-server system, or alternatively, the processor and the memory are in a first device, and a display unit is a part of a second device where the second device is different from the first device, and further the display unit displays the three-dimensional representation.

According to an embodiment of this invention, there is provided a memory storing instructions to perform a method for producing a three-dimensional image from a two-dimensional image including objects represented by a plurality of polygons stored therein, said method comprising:

ordering polygons in the plurality of polygons in a sequence defined by layering of the polygons in the two-dimensional image wherein a first polygon in the sequence is a reference polygon; sequentially assigning each polygon in the sequence, starting with the reference polygon, to one of a plurality of layers so that within a given layer no polygon assigned to the given layer (i) overlaps with another polygon in the given layer, and (ii) is included within another polygon in the given layer; and rotating the polygons of each layer around a common rotational axis to form a three-dimensional representation having a maximum rotational angle around said rotational axis with each polygon in a reference layer having a minimum rotational angle and polygons in layers other than said reference layer having a rotational angle greater than said minimum rotational angle and less than or equal said maximum rotational angle.

In one embodiment, the method is, transferred from the memory to another memory. In one case, this transfer is a download over a communications network.

In still another embodiment, a computer system includes:

means for ordering polygons in the plurality of polygons in a sequence defined by layering of the polygons in the two-dimensional image wherein a first polygon in the sequence is a reference polygon; means for sequentially assigning each polygon in the sequence, starting with the reference polygon, to one of a plurality of layers so that within a given layer no polygon assigned to the given layer (i) overlaps with another polygon in the given layer, and (ii) is included within another polygon in the given layer; and

means for rotating the polygons of each layer around a common rotational axis to form a three-dimensional representation having a maximum rotational angle around said rotational axis with each polygon in a reference layer having a minimum rotational angle and polygons in layers other than said reference layer having a rotational angle greater than said minimum rotational angle and less than or equal to said maximum rotational angle.

BRIEF DESCRIPTION OF THE DRAWINGS

Figure 1A shows an example of a front view of a two-dimensional image comprising a plurality of polygons with a reference plane to define a reference polygon according to an embodiment of this invention.

Figure 1B shows a three-dimensional rotational representation of the two-dimensional image of Figure 1A according to one embodiment of this invention.

Figure 1C shows a representation of the elements of the two-dimensional image of Figure 1A as ordered in layers according to their depth.

Figure 1D shows a top view of the three-dimensional image of Figure 1B.

Fig. 1E shows a top view of a three-dimensional image according to an embodiment of this invention.

Fig. 1F shows a top view of a three-dimensional image according to an embodiment of this invention.

Figure 2 is a process flow diagram for one embodiment of this invention.

Figures 3A to 3E show an ordered sequence of the polygons of Figure 1A and an assignment of the polygons to layers according to the method of Figure 2.

Figure 4A is a high level block diagram of a system that includes the method of Figure 2.

Figure 4B is a high-level block diagram where the computer system of Figure 4A is distributed among a plurality of devices that are interconnected via a network.

Figure 4C is a high-level block diagram where the computer system of Figure 4A is distributed among a plurality of devices, and the method of this invention is transferred from a memory in a first device to a memory in a second device.

Herein, elements with the same reference numeral are the same element.

DETAILED DESCRIPTION

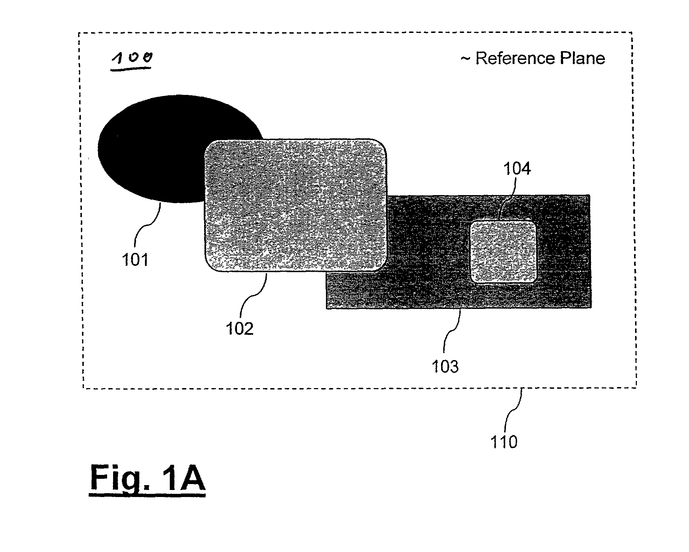

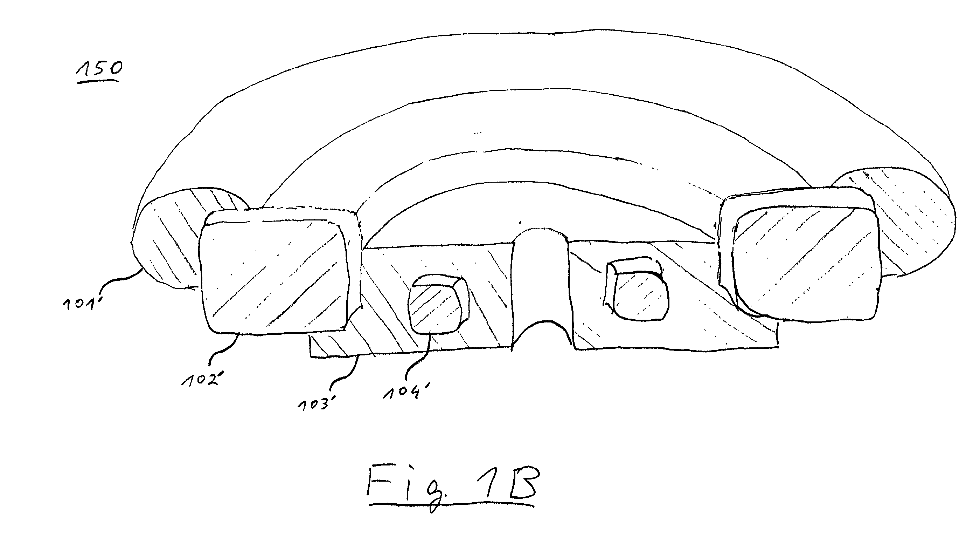

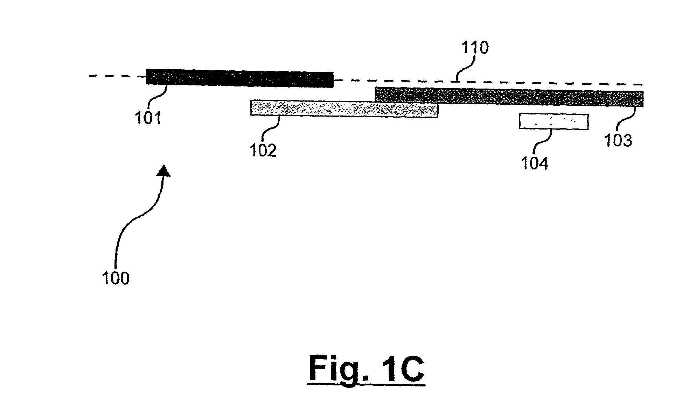

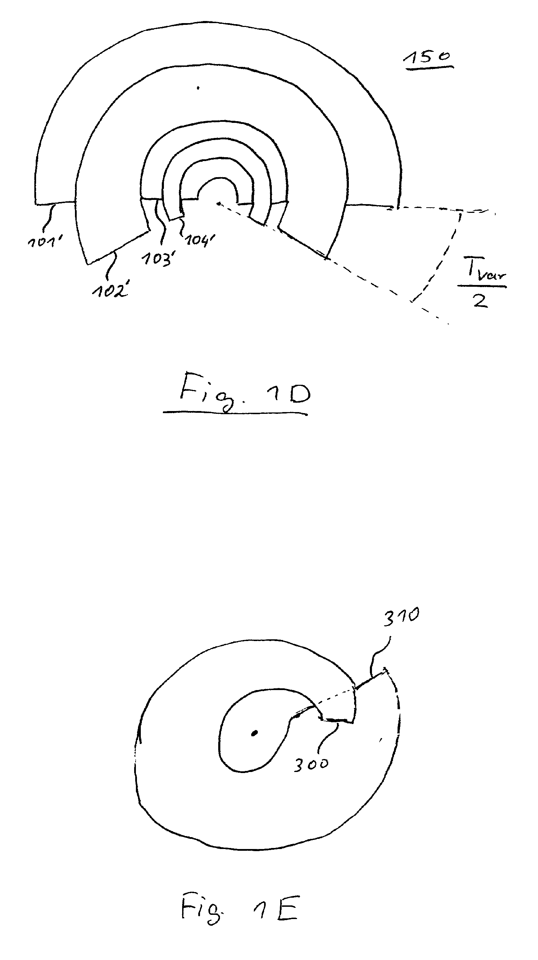

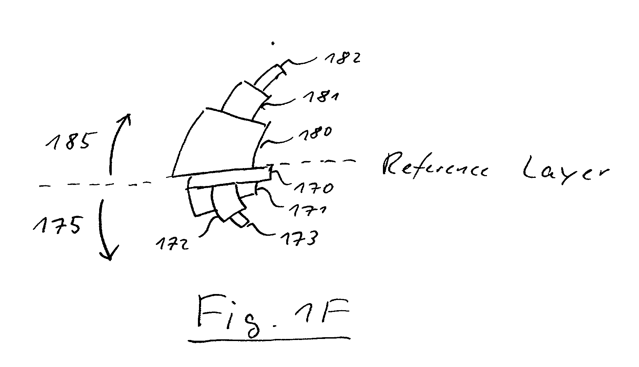

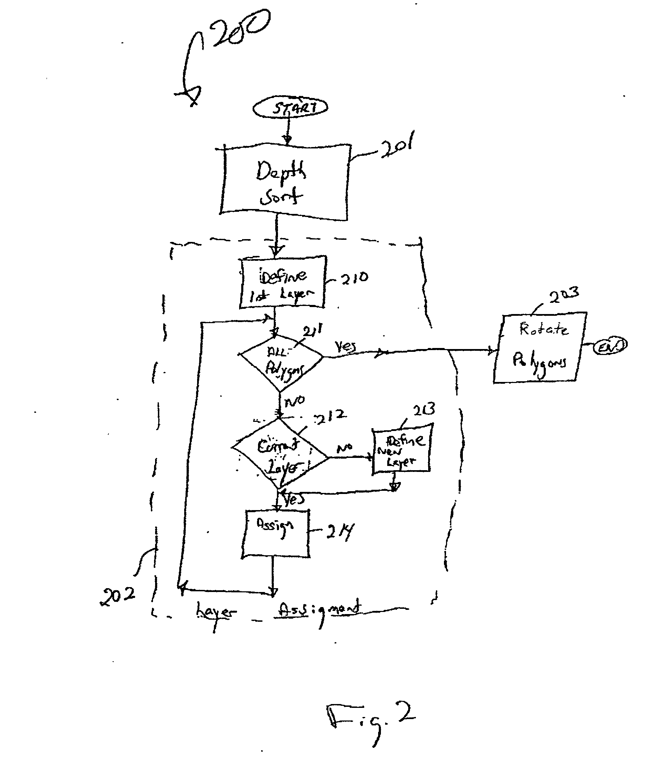

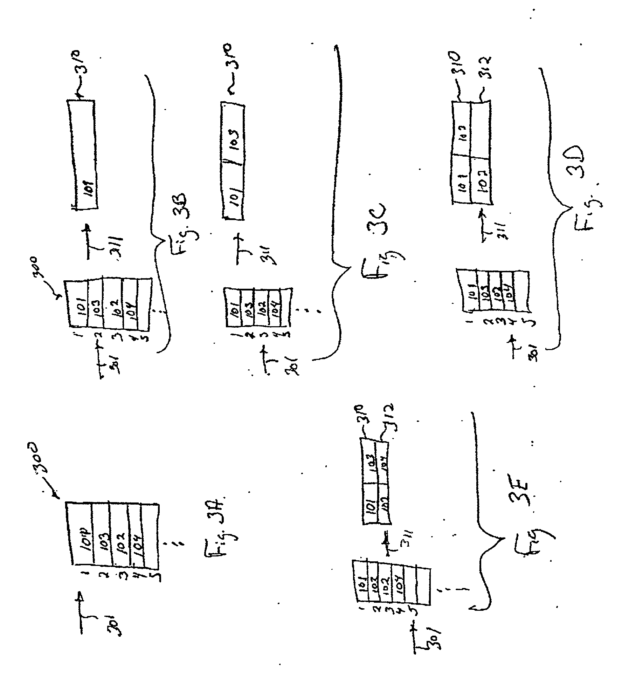

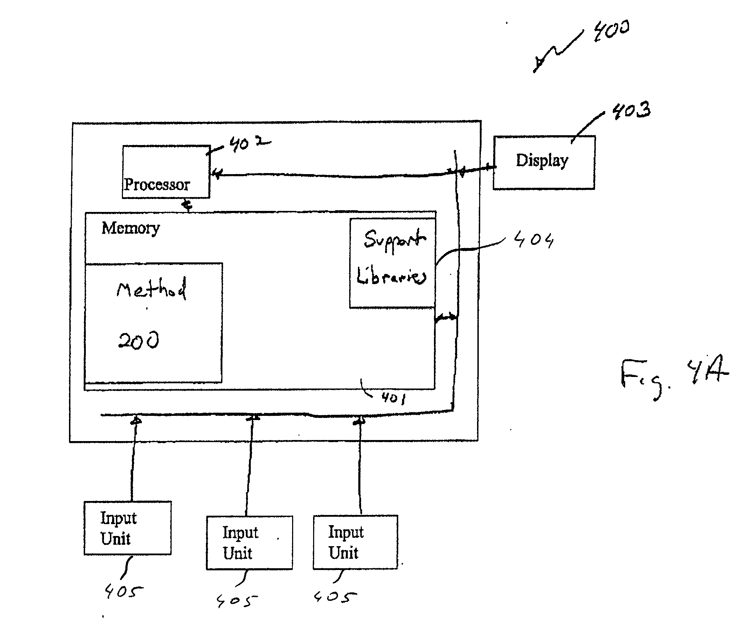

In connection with the accompanying drawings embodiments of the invention will now be described. Based on a two-dimensional image as illustrated in Fig. 1A depth information is obtained to assign the elements of the two-dimensional image to individual layers as shown in Fig. 1C in a perspective view and in Fig. 1D in a top view. A rotational image as shown in Fig. 1B or Fig. 1C is generated using a method illustrated in Fig. 2, with details of the method being explained in connection with Fig. 3A to 3D. Examples of the rotational image generated by alternative embodiments are shown in Fig. 1E and Fig. 1F.

According to an embodiment of this invention, information in a two-dimensional image 100 (Fig. 1A), i. e., the depth information as represented by the overlap of objects 101 to 104 that make up two-dimensional image 100, is used to generate a rotational three-dimensional representation 150 of two-dimensional image 100, which is referred to herein as a three-dimensional image 150 (Fig. 1B). In particular, the layering of objects 101 to 104 in two-dimensional image 100 is used to assign each two-dimensional object to one of a plurality of layers.

Each two-dimensional object in a given layer in the plurality of layers is rotated around a defined rotational angle, so that all two-dimensional objects assigned to the same layer are rotated around the same rotational angle. The rotational angle of a particular layer, as explained more completely below, is determined by the relative location of the layer in the three-dimensional representation to the location of the other layers in the plurality of layers, and is selected to provide a rotational image which maintains and visually represents the depth information of the two-dimensional image. Moreover, parts of polygons, which are obscured in the two-dimensional image, are also obscured in the three-dimensional rotational representation.

In one embodiment, the three-dimensional objects produced on the basis of the two-dimensional objects lying further back, as defined by the layering, are rotated by a smaller rotational angle, while on the other hand those lying further forward are correspondingly rotated by a larger angle. Hence, according to this embodiment, the inherent depth sorting present in two-dimensional image 100 is used to generate a three-dimensional rotational representation of the depth information.

While simple two-dimensional polygons are used to define the two-dimensional objects in Figures 1A, the invention is not limited to such definitions. The two-dimensional objects can be defined based upon patterns, color and/or shading of areas or based on the texture of areas in the two-dimensional image.

In general, each object in a two-dimensional image is defined by a polygon, which encloses a distinguishably represented area of the object. The representation of objects in a two-dimensional image by polygons is well known and so is not considered further. Moreover, the use of a specific set of polygonal objects to demonstrate the principles of this invention is illustrative only, and is not intended to limit the invention to the specific set used.

Method 200 (Figure 2) of this invention includes a depth sorting operation 201. In depth sorting operation 201, polygons in the two-dimensional image are ordered according to the sequence of their layering in the two-dimensional image with respect to a reference polygon, which in the embodiment of Figure 1A is defined by a reference plane. Hence, depth sorting operation 201 generates a sequence of polygons defined by layering of polygons in the two-dimensional image where a first polygon in the sequence is the reference polygon. Upon completion, depth sorting operation 201 transfers processing to layer assignment operation 202.

Layer assignment operation 202 sequentially assigns each polygon in the sequence, starting with the reference polygon, to one of a plurality of layers so that within a given layer a polygon assigned to that layer neither (i) overlaps with another polygon in the given layer, nor (ii) is included within another polygon in the given layer. Upon completion, layer assignment operation transfers processing to rotate polygons operation 203.

Rotate polygons operation 203 rotates the polygons of each layer to form a three-dimensional representation having a maximum rotational angle with each polygon in a reference layer having a minimum rotational angle and polygons in layers other than the reference layer having a rotational angle greater than the minimum rotational angle and less than or equal to the maximum rotational angle.

Fig. 1B visualizes the result of such a rotation operation in a perspective view, Fig. 1D shows the same result in a top view. Object 101' in the rotational image ( Fig. 1B and Fig. 1D) corresponds to object 101 in the two-dimensional image, similarly object 102' corresponds to object 102, object 103'corresponds to object 103 and object 104' corresponds to object 104. From those figures it becomes clear that the method provides a three-dimensional rotational representation which maintains the depth information of the two-dimensional image. Those objects which in the two-dimensional representation are located more in front (closer to the viewer) are rotated by a larger rotational angle and therefore are "sticking out" in the rotational image.

Method 200 is considered in further detail using image 100, as example. In particular, depth sorting operation 201 of this invention is demonstrated with respect to Figure 1A, which is an example of a two-dimensional image 100 including four polygons 101, 102, 103, and 104. Polygon 102 overlaps polygons 101 and 103, while polygon 104 overlaps polygon 103, and actually is included within the boundary of polygon 103. (Reference plane 110 is not a part of two-dimensional image 100) This overlapping is implicit in Figure 1A.

For purposes of illustration only, Figure 1C is presented, which is a representation of the depth layering of objects 101 to 104 as presented in Figure 1A. Figure 1C shows that object 101 is deepest, e.g., furthest removed from the front surface as viewed in Figure 1A, followed by objects 103,102, and 104 respectively. (This information, i.e., the actual relative depth, is not required, but is shown here for exemplary purposes.)

In this embodiment, in depth sorting operation 201, polygons in two-dimensional image 100 are ordered according to the sequence of their layering in two-dimensional image 100 with respect to a reference plane 110 that defines the reference polygon. In the example of Figures 1A and 1C, reference plane 110 is at the rear of image 100. Accordingly, the rearmost polygon 101 in two-dimensional image 100 is assigned first place in the order, i.e., is the reference polygon, polygon 103 second place, polygon 102 third place, and front most polygon 104 in two-dimensional image 100 is assigned last place in the order. Thus, depth sorting operation 201 generates an ordered list 300 of polygons in image 100, i.e., an ordered sequence of polygons. It is thereby preferable to generate the ordered list in a manner that if possible such a polygon is ordered as next to a current polygon in a sequence for which between the current polygon and the next polygon in sequence there is no overlap. If no such non-overlapping polygon is available, then the one of the polygons overlapping with the current one is chosen which is located rearmost (based on the overlap information with other polygons). If more than one such rearmost polygons are available (e.g. if two or more groups of polygons are present, each of the groups having a rearmost polygon, but none of the polygons of one group overlaps with a polygon of the other group), then arbitrarily one of the rearmost polygons may be chosen as next polygon. Automatically then the another rearmost polygon of another group will be chosen to be ordered next, since per definition it does not overlap with the one selected before.

By such an ordering the number of necessary layers which have to be assigned (as will be described later in more detail) can be minimized. The resulting three-dimensional image will then only contain the least number of different rotational angles necessary to provide a good-looking rotational representation of the two-dimensional image.

In Figure 3A, the reference numerals for the polygons are illustrated in ordered list 300. This is illustrative only as is the use of an ordered list. Methods for storing and/or representing ordered data in a sequence are well known, as are methods for representing polygons in a computer memory, and determining whether polygons in a two-dimensional image overlap. The particular methods used to represent the ordered data and the two-dimensional polygons are not essential to this invention.

The important aspect in depth sorting operation 201 is to select one polygon to define an initial reference and then ordering the other polygons with respect to that reference polygon based upon the overlap. In this example, reference plane 100 is simply one way to define the initial reference for the depth layering that aids in the visualization of the invention. Depth layering operation 201 transfers processing to layer assignment operation 202. Depending on the preferences depth layering may be carried out as outlined before in order to minimize the number of layers necessary in layer assignment operation 202 which is described later.

Prior to considering the application of operation 202 to image 100, operations within layer assignment operation 202 are considered in general. Define first layer operation 210 in operation 202 defines a first layer in the three-dimensional image and assigns the first polygon in the ordered list, i.e., ordered sequence, of polygons to the first layer, i.e., to a reference layer. A current polygon pointer is advanced to the second polygon in the ordered list of polygons. Also, a current layer pointer is set to the first layer. As used herein, the current layer refers to the layer addressed by the current layer pointer. Define first layer operation 210 transfers processing to all polygons processed check operation 211.

All polygons processed check operation 211 determines whether all the polygons in the ordered list have been processed in layer assignment operation 202. If one or more polygons remain to be processed, check operation 211 transfers in current layer check operation 212 and otherwise to rotate polygons operation 203.

Current layer check operation 212 determines whether the current polygon, i.e., the polygon in the ordered list of polygons addressed by the current polygon pointer, overlaps any polygons in the two-dimensional image that are assigned to the current layer. As used herein, overlap can be either a partial overlap, or a total overlap where one polygon lies completely in front of another polygon. However, to remove any ambiguity, a complete enclosing of a polygon, called an inclusion, is considered.

If there is no overlap or inclusion in the two-dimensional image between the current polygon and any polygons in the two-dimensional image that are assigned to the current layer, check operation 212 transfers to assign operation 214 and otherwise to define new layer operation 213.

Hence, upon entry to define new layer operation 213, check operation 212 determined that the current polygon overlaps a polygon in the current layer. Consequently, define new layer operation 213 generates a new layer, and changes the current layer pointer to address the new layer so that the new layer becomes the current layer. Operation 213 also transfers to assign operation 214.

Assign operation 214 assigns the current polygon to the current layer, and advances the current polygon pointer to the next polygon in the ordered list of polygons. Assign operation 214 transfers to all polygons processed check operation 211.

Operations 211, 212, 213 and 214 are repeated until all polygons in the ordered list of polygons are assigned to a layer and so layer assignment operation 202 is complete. Layer assignment operation 202 transfers processing to rotate polygons operation 203 in which the polygons are rotated and a resulting three-dimensional rotational image is displayed on a display unit of a device. As explained more completely below, the display unit can be a part of the same device that executes method 200, or alternatively, the display unit can be part of a device that is different from the device that executes method 200.

The layer assignment operation 202 of Fig. 2 will now be explained in more detail in connection with Figures 3A to 3E using the two-dimensional image of Fig. 1A as an example and referring also to the steps of layer assignment operation 202 shown in Fig. 2. Layer assignment operation 202 of Fig. 2 receives an ordered list 300 of polygons from depth sort operation 201 of Fig. 2 and then based on the ordered list 300, the generation of which has been described in detail before, starts to assign layers to the polygons in ordered list 300. Layer assignment operation 202 sequentially assigns layers to the polygons in ordered list 300. The assigning of the layers to the polygons in ordered list 300 is sequentially performed for individual polygons one after another, where a polygon for which an assignment is currently to be performed is addressed by a current polygon pointer 301 as shown in Figures 3A to 3E.

The ordered list 300 resulting from depth sort operation 201 of Fig. 2 is shown in Fig. 3A. A current polygon pointer 301 addresses a first polygon in ordered list as shown in Fig. 3A. Define first layer operation 210 of Fig. 2 assigns polygon 101, which is stored in a location in ordered list 300 that is addressed by current polygon pointer 301, to first layer 310. This operation is illustrated in Figure 3B as storing reference numeral 101 in a location in memory for first layer 310 which is addressed by current layer pointer 311. Current layer pointer 311 is a pointer which addresses a memory location corresponding to a certain layer. Operation 210 advances current polygon pointer 301 to address the next location in ordered list 300, which in this example is location two that stores polygon reference numeral 103. Operation 210 transfers to operation 211.

In operation 211, current polygon pointer 301 identifies a valid polygon, which means that there still is a polygon in ordered list 300 which needs to be assigned to a layer. Therefore operation 211 transfers to current layer check operation 212 to for an overlap or an inclusion. Methods for determining whether one polygon overlaps or is included within another are known to those of skill in the art, and the particular method for determining overlap and/or inclusion is not essential to this invention. As shown in Figure 1A, polygon 103 does not overlap polygon 101, which is the only polygon assigned to first layer 310 at this time. Therefore, polygon 103 is considered to be located in the first layer 310, and processing transfers to assign operation 214.

Assign operation 214 assigns polygon 103 to layer 310, which is addressed by current layer pointer 311 (Fig. 3C). Assign operation 214 advances current polygon pointer 301 to address the next location in ordered list 300, which in this example is location three that stores polygon reference numeral 102. Operation 214 transfers to operation 211.

In operation 211, current polygon pointer 301 identifies a valid polygon 102 which needs to be assigned to a layer and so operation 211 transfers to object 102 in current layer check operation 212. As shown in Figure 1A, polygon 102 overlaps polygons 101 and 103, which are assigned to first layer 310. Therefore, polygon 103 is not in first layer 310, and processing transfers to define new layer operation 213.

Define new layer operation 213 generates a new layer 312, and changes current layer pointer 311 to address new layer 312 so that layer 312 becomes the current layer. Operation 213 also transfers to assign operation 214.

Assign operation 214 assigns polygon 103 to layer 312, which is addressed by current layer pointer 311 (Fig. 3D). Assign operation 214 advances current polygon pointer 301 to address the next location in ordered list 300, which in this example is location four that stores polygon reference numeral 104. Operation 214 transfers to operation 211.

In operation 211, current polygon pointer 301 identifies a valid polygon 104 which needs to be assigned to a layer and so operation 211 transfers to object 104 in current layer check operation 212. As shown in Figure 1A, polygon 104 does not overlap polygons 102 which is assigned to current second layer 312. Therefore, polygon 104 is located in second layer 312 , and processing transfers to assign operation 214.

Assign operation 214 assigns polygon 104 to layer 312, which is addressed by current layer pointer 311 (Fig. 3E). Assign operation 214 advances current polygon pointer 301 to address the next location in ordered list 300, which in this example is location five that does not store a polygon reference numeral. Operation 214 transfers to operation 211. In operation 211, current polygon pointer 301 does not identify a valid polygon because there is no remaining polygon which needs to be assigned to a layer and so operation 211 transfers to rotate polygons operation 203.

Hence, up to this point, method 200 according to this embodiment is associated with a series of advantages: the polygons are ordered in layers according to their depth by taking over of the depth information implicitly present in the two-dimensional image. A polygon handled later is assigned to the layer of the polygon previously considered if there is no overlap but is assigned to a new layer if there is an overlap or an inclusion with the polygon previously considered. This has the effect of producing a better impression of the depth in the three-dimensional rotational image while at the same time minimizing the layers required. It creates advantages with regard to the running time for the method, since the complexity of the method merely increases linearly with the number of objects. Moreover, a representation with a natural look is achieved.

In rotate polygons operation 203, the polygons of each layer are rotated to form a three-dimensional rotational representation in such a way that each polygon is given a rotational angle which is between a minimum rotational angle (Tmin) and a maximum rotational angle (Tmax) according to their layering. In the embodiment described before the polygons which are assigned to a reference layer are rotated by rotational angle Tmin, and the polygons which are assigned to layers other than the reference layer are additionally rotated by variable rotational angle Tvar up to a maximum variable rotational angle (Tvar max_n). Corresponding to the ordering of the layers in depth Tvar increases from zero (for the polygons in the reference layer) up to Tvar max_n for the polygons of the layer which is most distant from the reference layer. The value of Tvar for the polygons assigned to a certain layer therefore corresponds to and reflects the (depth) location of this layer within the whole set of layers.

It should be noted that this correspondence between the position of a layer within the ordered set of layers not necessarily corresponds to the time at which the layer has been generated, although this is the case for the embodiment described before. However, it may well be possible that there is a predefined reservoir of layers to which the polygons then are assigned such that no overlap or inclusion exists for the polygons assigned to a single layer. In such a case define layer operation 213 of Fig. 2 instead of actually generating a new layer would just select a new layer for assigning the current polygon to it. It should be noted here that independent of the time or the way the layers are generated, which may vary from embodiment to embodiment as becomes clear from the foregoing, the polygons which have been ordered sequentially by depth sort operation 201 are then assigned by layer assignment operation 201 to one or more layers such that a layer does not contain polygons which overlap or have an inclusion. According to the ordering of the layers then the polygons of the individual layers are rotated by a rotational angle between Tmin and Tmax.

The maximum rotational angle (Tmax) is divided in a predetermined ratio between the minimum rotational angle (Tmin) and the maximum variable rotational angle (Tvar max_n) for the polygons of the layer located most distantly from the reference layer in terms of ist depth order.

Hence, a maximum rotational angle Tmax for the overall three-dimensional image is defined. Maximum rotational angle Tmax is divided in a certain ratio between a minimum rotational angle Tmin and a maximum variable rotational angle Tvar_max_n, described more completely below, where Tmax = Tmin + Tvar_max_n. Specifically, a rotational thickness ratio Tthick is defined as:

$$Tthick = Tmin / Tvar\_max\_n.$$

Values of rotational thickness ratio Tthick in the range of 80 to 20 have been found to be particularly favorable while alternatively values in the range of 40 to 60 or values in the range of 5 to 95 may also be used. In one embodiment, the user selects the desired ratio. The ratio represents a compromise between a minimum variable content to avoid false representations in conjunction with z-buffer methods and a maximum variable content to avoid reducing the overall rotational angle excessively. Z-buffer methods are common in image processing, they basically use the assignment of a z-value coding for the depth location of a pixel (the location in z-direction) to each individual pixel of a two-dimensional image. Depth impression such as the covering of an object located more rearwards by an object located more in front can be generated using such z-buffer methods by judging based on the z-buffer values which object is located more rearwards and which one is located more in front. Since this usually involves a limited accuracy (z-buffers usually are hardware supported and therefore have only integer accuracy) it may happen that two-dimensional objects due to rounding errors or due to other problems resulting from the limited accuracy of z-buffer methods may have the same z-buffer values, thereby making a depth judgement impossible. In such cases there arises an undefined state since it cannot be determined which object should be displayed in front and which one behind, thereby leading to a false representation. This problem becomes less severe if Tvar_max_n increases (which means if Tthick decreases) since then there is a larger difference in rotational angle between the polygons of different layers, thereby avoiding the likelihood of false representations arising from the limited accuracy of z-buffer methods.

On the other hand, a too large value of Tvar_max_n (and consequently a too small value of Tthick) may lead to a three-dimensional rotational image in which the depth representation is too excessive, which may give an undesirable or unfavorable visual impression..

Hence, if the three-dimensional image includes four layers, a first layer has rotational angle Tmin, a fourth layer has rotational angle Tmax, a second layer has a rotational angle T2, and a third layer has a rotational angle T3, where the rotational angles are such that:

$$Tmin < T2 < T3 < Tmax,$$

where

$$T2 = (Tmin + Tvar\_2),$$

$$T3 = (T2 + Tvar\_3),$$

$$Tmax = (T3 + Tvar\_4) = Tmin + Tvar\_max\_n.$$

When multiple layers are rotated in operation 203, it is also visually advantageous for the viewer to allow variable rotational angle Tvar to increase in each case linearly or logarithmically with the sequence of the formation of the layers. This may increase the impression of the layering in the rotational body representation.

Returning to two-dimensional image 100 of Fig. 1A, there are only two layers and so polygons 100 and 103 in first layer 310, which is chosen as the reference layer, are given a rotational angle Tmin, while polygons 102 and 104 in second layer have a rotational angle of (Tmin + Tvar_2) which is in this case is also (Tmin + Tvar_max_n). See Figure 1B. Figure 1B is the three-dimensional image generated as a result of rotate polygons operation 203. Figure 1 D is a top view of the three-dimensional rotational image of Figure 1B that shows the various rotational angle dimensions more clearly.

One advantage of this embodiment is that the number of layers in the three-dimensional rotational representation is as small as possible. If the method of this invention is utilized but the inherent depth information in the two-dimensional image is not utilized, four layers are necessary if each polygon in Figure 1A is assigned to a separate layer. Since, however, polygons 102 and 104 do not overlap one another, polygons 102 and 104 can be assigned to the same layer without impairing the impression of depth for the viewer in the rotational image. The method of this invention thus accumulates the two-dimensional depth sorting with the "real" two-dimensional overlapping of the individual polygons.

The result of an application of a method according to this embodiment to a group of objects as shown in Fig. 1A is illustrated in Fig. 1B. The polygons 101 and 103 in the rearmost layer are rotated by an angle Tmin to form rotational bodies 101' and 103', respectively, and the polygons 102 and 104 of the layer located more in front are rotated along an additional angle Tvar so that they "stick out" in the three-dimensional rotational representation as objects 102' and 104', respectively, and thereby give the user an impression of the layering of the original image even after the rotational body has been generated.

Fig. 1D shows a top view of the resulting rotational image. In the embodiment illustrated in Figs. 1B and 1D the additional rotational angle Tvar around which the polygons located more in front are rotated is distributed symmetrically between the left-hand and the right-hand front area of the rotational body, as can be seen clearly from Fig. 1D. Thereby each of the front planes of the resulting open rotational body preserves the impression of the depth information as contained in the original two-dimensional image.

It is readily apparent that such a result as shown in Figs 1B and 1D can be generated by rotating the initial two-dimensional image around a rotational axis by Tmin/2 clockwise and additionally by Tmin/2 counterclockwise, and furthermore by rotating the layers located more close to the user by (Tmin+Tvar)/2 clockwise and by (Tmin+Tvar)/2 counterclockwise, starting from the reference layer. This results in a symmetrical rotational image as shown in Figs. 1B and 1D, if the resulting rotational body as a whole is then rotated such that the open front planes are looked upon by the user as in Fig. 1B.

It is readily apparent to the skilled person that the method of this embodiment is particularly advantageous for rotational angles Tmin other than 360° and for angles Tvar other than zero. Imagine Tmin to be 360° and Tmax=Tmin, then the method would be identical to the classical method of generating a rotational body. If, however, a rotational angle Tmin other than 360° is selected, and if further Tmax is not equal to Tmin (in other words: Tvar does not equal zero), then the method of this embodiment provides an advantageous rotational representation which preserves the depth impression of the two-dimensional image.

In view of this disclosure, various alternative embodiments are possible. For example, the user may be provided with an interface which allows him to input several additional parameters with respect how to generate the rotational representation. This may e.g. include (in addition to parameters such as Tmin and Tmax or the rotational thickness Tthick) the location of the rotational axis. Also, a user may choose a scaling parameter which defines a ratio by which an area of a polygon is to be increased or decreased when rotating the polygon. This is examplarily illustrated in Fig. 1E. Fig. 1E shows a top view of a rotational image resulting from rotating a polygon 300 by a rotational angle larger than 360° while the area of the polygon continually increases together with an increasing rotational angle. The surface 310 of the rotated polygon has an area larger than the initial polygon 300 as defined by a scaling factor. Using such a scaling factor leads to constellations where even for rotational angles larger than 360° open planes are viewable to the user, and in such cases it is then advantageous to have the polygons which in the initial two-dimensional representation are located more in front rotated by an additional angle Tvar.

Furthermore, preferably the resulting rotational image as a whole can be rotated as desired by the user around any rotational axis.

In a further embodiment, different sets of rotation angles (Tmin, Tmax) for clockwise rotation and for counterclockwise rotation may be chosen, the resulting rotational image being the concatenation of the images which respectively result from the clockwise and the counterclockwise rotation of the initial two-dimensional image based on the inputted parameters. This then of course results in an image not being symmetrical with respect to the rotational axis.

In another possible embodiment the reference layer is not the rearmost layer but rather a layer in the middle. Rotation may then be carried out into different directions for the layers located in front and behind the reference layer, possibly with different sets of Tmin and Tmax also, resulting in an image resembling a "telescopic" representation of the original two-dimensional representation. This is schematically illustrated by in Fig. 1F showing a top view of a rotational image resulting from this embodiment. Therein objects 170, 171, 172 and 173 result from rotation of their corresponding two-dimensional images into a first direction indicated by arrow 175, and objects 180, 181 and 182 result from rotation of their corresponding two-dimensional objects into the opposite direction as indicated by arrow 185. It can also be seen from Fig. 1F that the Tmax is larger for the rotation direction indicated by arrow 185 compared to a smaller Tmax for the rotation direction indicated by arrow 175.

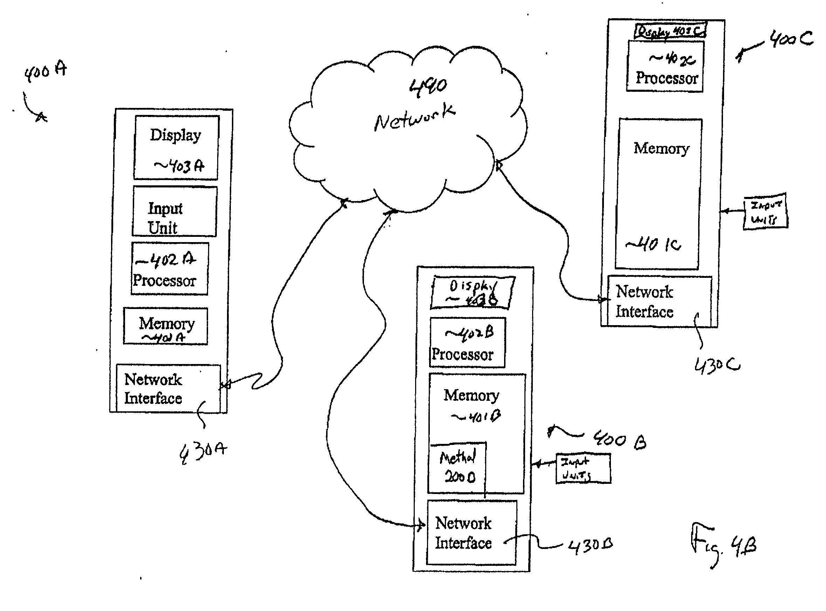

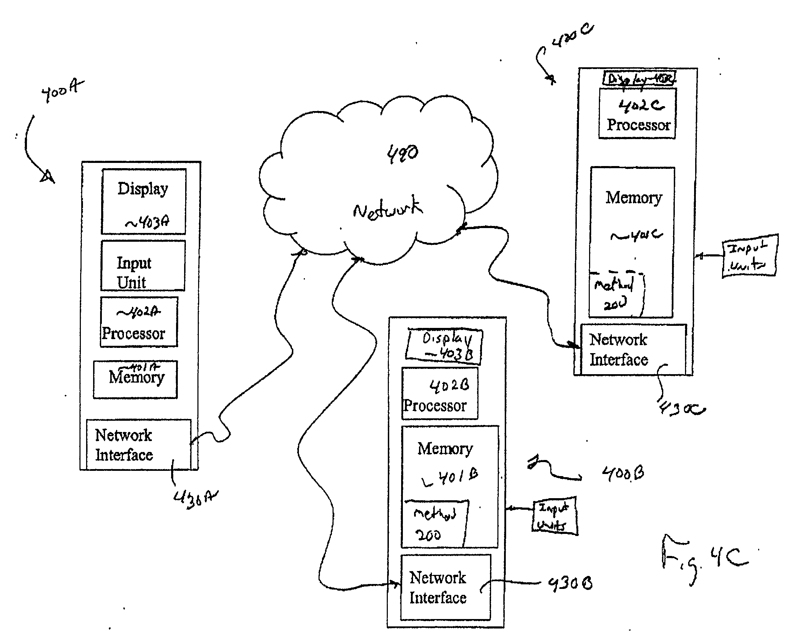

In one embodiment, instructions to perform method 200 are stored in a memory 401 (Fig. 4A), either volatile or non-volatile or a combination of the two, and executed from memory 401 by a processor 402. For example, non-volatile memory can include, but is not limited to, any one or more of a hard disk drive, a floppy disk, magnetic tape, flash memory, CD-ROM, or any other suitable memory that one programmed retains the programmed information. As used herein, programmed means storing information in the memory. Further, those of skill in the art will appreciate that while memory 401 is illustrated as one unit, in most computer systems, memory 401 is implemented as a plurality of memory units. In more general terms, instructions to perform method 200 are stored in a computer readable medium, and when the instructions to perform method 200 are loaded from the computer readable medium into a memory of a device, the device is configured to be a special purpose machine that executes method 200.

Either method 200 can call a user interface displayed on display unit 403 so that one or more of the minimum rotational angle, maximum rotational angle, maximum variable rotational angle, or the rotational thickness ratio can be input by the user, or this data can be obtained via a user interface and stored for subsequent use by method 200. Input units 405 may be provided to enable data to be input by a user. The input units may e.g. be in the form of a keyboard or a mouse, but are not limited thereto.

The particular configuration of the processor 402, memory 401, and display unit 403 are not essential to this invention. The three-dimensional image may also presented on display unit 403, sent to a printer, a facsimile machine, or any other display unit capable of displaying the three-dimensional image generated by method 200.

Also, stored in memory 401 are the various drivers and libraries 404 required for generating a three-dimensional rotational image. The particular routines and drivers used to support method 200 of this invention depend for example on the operating system, computer programming language, and processor used to implement this invention, and are not essential to this invention. In view of this disclosure, those of skill in the art can implement the invention of a wide-variety of physical hardware configurations using an operating system and computer programming language of interest to the user.

Computer system 400, in one embodiment, can be a portable computer, a workstation, a two-way pager, a cellular telephone, a digital wireless telephone, a personal digital assistant (PDA), or any other device that includes the components shown and that can execute method 200. Similarly, in another embodiment, computer system 400 can be comprised of multiple different computers, wireless devices, cellular telephones, digital telephones, two-way pagers, or personal digital assistants or any desired combination of these devices that are interconnected to perform method 200 as described herein. See for example, Figure 4B, where computer systems 400A, 400B and 400C are schematically illustrated which are connected to and interconnected by a network 490 through network interfaces 430A, 430B and 430C, respectively. Accordingly, a computer memory refers to a volatile memory, a non-volatile memory, or a combination of the two in any one of these devices. Similarly, a computer input unit and a display unit refers to the features providing the required functionality to input the information described herein, and to display the information described herein, respectively, in any one of the aforementioned or equivalent devices.

In addition, memory 401 may be physically located in a location different from processor 402. The only requirement is that processor 402 is coupled to memory 401. This could be accomplished in a client-server system, or alternatively via a connection to another computer via modems and analog lines, or digital interfaces and a digital carrier line. For example, memory 401 could be in a World Wide Web portal 400B (Fig. 4B), while display unit 403 and processor 402 are in personal digital assistant (PDA), or a wireless telephone 400A. Conversely, display unit 403 could be in a client computer 400C, a wireless telephone 400A, or a PDA, while memory 401 and processor 402 are part of a server computer 400B on a wide area network, a local area network, or the Internet.

In view of this disclosure, method 200 can be implemented in a wide variety of computer system configurations. In addition, method 200 could be stored as different modules in memories of different devices. For example, method 200 could initially be stored in a server computer 400B, and than as necessary, a module of method 200 could be transferred to a client device 400A, or 400C and executed on the client device. Consequently, part of method 200 would be executed on the server processor, and another part of method 200 would be executed on the client device.

In yet another embodiment illustrated in Figure 4C, method 200 is stored in memory 401B of system 400B. Method 200 is transferred, over network 490 to memory 401C in system 400C. In this embodiment, network interface 430B and 430C can be analog modems, digital modems, or a network interface card. If modems are used, network 490 is a communications network, and process 200 is said to be downloaded.

Thus, the method of this invention can be implemented in a variety of devices, and can be used for a variety of applications by those of skill in the art in view of this disclosure. Accordingly, the embodiments described above are illustrative only and are not intended to limit the invention to the specific configurations described.

**Claims**

1.  A method for producing a three-dimensional image from a two-dimensional image including objects represented by a plurality of polygons, the method comprising:

    ordering polygons in said plurality of polygons in a sequence defined by layering of said polygons in the two-dimensional image wherein a first polygon in said sequence is a reference polygon;
    sequentially assigning each polygon in said sequence, starting with said reference polygon, to one of a plurality of layers so that within a given layer a polygon assigned to that layer neither (i) overlaps with another polygon in the given layer, nor (ii) is included within another polygon in the given layer; and
    rotating the polygons of each layer around a common rotational axis to form a three-dimensional representation having a maximum rotational angle around said rotational axis with each polygon in a reference layer having a minimum rotational angle and polygons in layers other than said reference layer having a rotational angle greater than said minimum rotational angle and less than or equal said maximum rotational angle.

2.  The method of Claim 1 wherein the reference layer includes the reference polygon.

3.  The method of claim 1 or 2, wherein the resulting three-dimensional representation is symmetrical with respect to a plane in which said rotational axis is located.

4.  The method of Claim 1, 2 or 3, wherein a maximum variable rotational angle is defined as the difference between the maximum rotational angle and the minimum rotational angle, and wherein a rotation ratio is the ratio of the minimum rotational angle to the maximum variable rotational angle.

5.  The method of Claim 4 wherein the rotation ratio is a range of 95 to 5.

6.  The method of Claim 5 wherein the thickness ratio is in the range of 80 to 20.

7.  The method of one of the preceding claims, wherein a scaling factor is defined as the factor by which an area of a polygon is to be increased or decreased when rotating it to form the rotational image.

8.  The method of Claim 1 further comprising:

    displaying said three-dimensional representation.

9.  A system comprising:

    a processor; and
    a memory storing a method for producing a three-dimensional image from a two-dimensional image including objects represented by a plurality of polygons, the method comprising:

    ordering polygons in said plurality of polygons in a sequence defined by layering of said polygons in the two-dimensional image wherein a first polygon in said sequence is a reference polygon;
    sequentially assigning each polygon in said sequence, starting with said reference polygon, to one of a plurality of layers so that within a given layer a polygon assigned to that layer neither (i) overlaps with another polygon in the given layer, nor (ii) is included within another polygon in the given layer; and

rotating the polygons of each layer around a common rotational axis to form a three-dimensional representation having a maximum rotational angle around said rotational axis with each polygon in a reference layer having a minimum rotational angle and polygons in layers other than said reference layer having a rotational angle greater than said minimum rotational angle and less than or equal said maximum rotational angle.

10. The system of Claim 9 wherein said system is a client-server system.

11. The system of Claim 9 wherein said processor and said memory are in a first device, and a display unit is a part of a second device wherein second device different from said first device, and further wherein said display unit displays said three-dimensional representation.

12. A memory having stored instructions to perform a method for producing a three-dimensional image from a two-dimensional image including objects represented by a plurality of polygons stored therein, said method comprising:

ordering polygons in said plurality of polygons in a sequence defined by layering of said polygons in the two-dimensional image wherein a first polygon in said sequence is a reference polygon;
sequentially assigning each polygon in said sequence, starting with said reference polygon, to one of a plurality of layers so that within a given layer a polygon assigned to that layer neither (i) overlaps with another polygon in the given layer, nor (ii) is included within another polygon in the given layer; and
rotating the polygons of each layer around a common rotational axis to form a three-dimensional representation having a maximum rotational angle around said rotational axis with each polygon in a reference layer having a minimum rotational angle and polygons in layers other than said reference layer having a rotational angle greater than said minimum rotational angle and less than or equal said maximum rotational angle.

13. The memory of Claim 12 wherein said method is transferred from said memory to another memory.

14. The memory of Claim 13 wherein said transfer comprises a download over a communications network.

15. A computer, system comprising:

means for ordering polygons in said plurality of polygons in a sequence defined by layering of said polygons in the two-dimensional image wherein a first polygon in said sequence is a reference polygon;
means for sequentially assigning each polygon in said sequence, starting with said reference polygon, to one of a plurality of layers so that within a given layer a polygon assigned to that layer neither (i) overlaps with another polygon in the given layer, nor (ii) is included within another polygon in the given layer; and
means for rotating the polygons of each layer around a common rotational axis to form a three-dimensional representation having a maximum rotational angle around said rotational axis with each polygon in a reference layer having a minimum rotational angle and polygons in layers other than said reference layer having a rotational angle greater than said minimum rotational angle and less than or equal said maximum rotational angle.

16. The system of Claim 15, wherein the generated 3D representation can be rotated around a rotational axis to change the user's view onto the 3D image.

17. The system of claim 15 or 16, wherein one or more of the variables minimum rotational angle, maximum rotational angle, maximum variable rotational angle as well as the rotational thickness ratio can be set by the user, preferably via a user interface.

18. A computer program comprising program code for carrying out the method of one of claims 1 to 8.

**Fig. 1A**

150

101'

102'

103'

104'

Fig. 1B

EP 1 204 075 A1

**Fig. 1C**

$$\frac{T_{var}}{2}$$

Fig. 1D

Fig. 1E

Fig. 1F

*200*

START

Depth
Sort — *201*

Define
1st Layer — *210*

ALL
Polygons *211* — Yes → Rotate
Polygons — *203* → END

No

Current
Layer ? *212* — No → Define
New Layer — *213*

Yes

Assign — *214*

Layer — Assignment

*202*

Fig. 2

Fig. 3A

Fig. 3B

Fig. 3C

Fig. 3D

Fig. 3E

EP 1 204 075 A1

Fig. 4A

Processor 402

Display 403

Memory

Support Libraries 404

Method 200

401

400

Input Unit 405

Input Unit 405

Input Unit 405

Fig. 4B

Fig. 4C

**European Patent Office**

## EUROPEAN SEARCH REPORT

Application Number

EP 00 12 3861

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | ROBERTZ W ET AL: "A graphical input system for computer-aided architectural design" CAD 80. PROCEEDINGS OF THE 4TH INTERNATIONAL CONFERENCE AND EXHIBITION ON COMPUTERS IN DESIGN ENGINEERING, BRIGHTON, UK, MARCH 1980, pages 715-723, XP000989651 1980, Guildford, UK, IPC Sci. & Technol. Press, UK * section C * * section E, paragraph 1; figures 4-7* * section F * | 1-9,12, 15-18 | G06T17/00 G06T15/20 |
| Y | SCHROEDER W J ET AL: "THE STREAM POLYGON: A TECHNIQUE FOR 3D VECTOR FIELD VISUALIZATION" PROCEEDINGS OF THE ANNUAL CONFERENCE ON VISUALIZATION,US,LOS ALAMITOS, IEEE. COMP. SOC. PRESS, vol. CONF. 2, 22 October 1991 (1991-10-22), pages 126-132, XP000286783 * abstract * | 1-9,12, 15-18 | |
| Y | COBURN F D III ET MCCORMICK P: "CorelDraw 9: The Official Guide" 1999 , OSBORNE/MCGRAW-HILL , BERKELEY XP002164528 * Chapters 12 and 18 * | 1-9,12, 15-18 | TECHNICAL FIELDS SEARCHED (Int.Cl.7) G06T G06F |

-/--

The present search report has been drawn up for all claims

| Place of search | Date of completion of the search | Examiner |
|---|---|---|
| BERLIN | 3 April 2001 | Bouchaâla, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

## EUROPEAN SEARCH REPORT

Application Number

EP 00 12 3861

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | AKMAN V ET AL: "SWEEPING WITH ALL GRAPHICAL INGREDIENTS IN A TOPOLOGICAL PICTUREBOOK" COMPUTERS AND GRAPHICS,GB,PERGAMON PRESS LTD. OXFORD, vol. 16, no. 3, 1992, pages 273-281, XP000546507 ISSN: 0097-8493 * abstract * | 1,3-9, 12,15-18 | |
| A | WOOD J ET AL: "VISUALIZATION OVER THE WORLD WIDE WEB AND ITS APPLICATION TO ENVIRONMENTAL DATA" PROCEEDINGS OF THE VISUALIZATION CONFERENCE,US,NEW YORK, IEEE/ACM, 27 October 1996 (1996-10-27), pages 81-86, XP000704173 ISBN: 0-7803-3673-9 * abstract * | 10,11, 13,14 | |
| A | WO 99 13433 A (HANRATTY PATRICK J) 18 March 1999 (1999-03-18) * section "Summary of the invention" (pages 4-5) * | 1,2,8,9, 12,15, 16,18 | TECHNICAL FIELDS SEARCHED (Int.Cl.7) |

The present search report has been drawn up for all claims

| Place of search | Date of completion of the search | Examiner |
|---|---|---|
| BERLIN | 3 April 2001 | Bouchaâla, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 204 075 A1**

**ANNEX TO THE EUROPEAN SEARCH REPORT
ON EUROPEAN PATENT APPLICATION NO.** EP 00 12 3861

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2001

| Patent document cited in search report | Publication date | Patent family member(s) | Publication date |
|---|---|---|---|
| WO 9913433 A | 18-03-1999 | US 5990897 A<br>AU 9484998 A | 23-11-1999<br>29-03-1999 |